# FASCICULE DE BREVET EUROPEEN

(11) **EP 2 477 995 B1**
(45) Date de publication et mention de la délivrance du brevet: **29.07.2015**
(21) Numéro de dépôt: 10762713.5
(22) Date de dépôt: 03.09.2010
(51) Int. Cl.: C07F 3/06

(54) **NOUVEAU SOLIDE HYBRIDE ORGANIQUE-INORGANIQUE DMOF-1-N3 POURVU D'UNE FONCTION AZOTURE ET SON PROCEDE DE PREPARATION**
NEUER ORGANISCHER/ANORGANISCHER HYBRIDER DMOF-1-N3-FESTSTOFF MIT EINER AZIDFUNKTION UND HERSTELLUNGSVERFAHREN DAFÜR
NOVEL ORGANIC/INORGANIC HYBRID DMOF-1-N3 SOLID PROVIDED WITH AN AZIDE FUNCTION, AND METHOD FOR PREPARING SAME

(30) Priorité: 18.09.2009 FR 0904521
(43) Date de publication de la demande: 25.07.2012
(73) Titulaire: IFP Energies nouvelles, 92852 Rueil-Malmaison Cedex (FR); CNRS, 75794 Paris Cedex 16 (FR); UNIVERSITE CLAUDE BERNARD - LYON 1, 69622 Villeurbanne Cédex (FR)
(72) Inventeur: SAVONNET, Marie, F-69001 Lyon (FR); FARRUSSENG, David, F-69380 Belmont d'Azegues (FR); PINEL, Catherine, F-69007 Lyon (FR); BAZER-BACHI, Delphine, F-69230 St-Genis-Laval (FR); BATS, Nicolas, F-69320 Feyzin (FR); LECOCQ, Vincent, F-69530 Brignais (FR)
(86) Numéro de dépôt international: PCT/FR2010/000603
(87) Numéro de publication internationale: WO 2011/033185

(56) Documents cités:
- WANG, Z., TANABE, K.K., COHEN, S.M.: "Accessing Postynthetic Modification in a Series of Metal-Organic Frameworks and the Influence of Framework Topology on Reactivity" INORG. CHEM, vol. 48, 20 novembre 2008 (2008-11-20), pages 296-306, XP002565334
- LEE, J.L., OLSON, D.H., PAN, L., EMGE, T.J., LI, J.: "Microporous Metal-Organic Frameworks with High Gas Sorption and Separation Capacity" .ADV. FUNCT. MATER., vol. 17, 2007, pages 1255-1262, XP002565335
- MAUTNER, F.A: ET AL.: "1D and 2D Systems Derived from Polynuclear [ML(N3)2]n (M=Zn(II) or Cd(II) and L is 2-Picoline-N-oxide or 4-Methylpyrimidine)" MONATSHEFTE FÜR CHEMIE, vol. 136, 2005, pages 107-117, XP002565336
- DYBTSEV, D.N. ET AL.: "Rigid and Flexible: A highly Porous Metal-Organic Framework with Unusual Guest-Dependent Dynamic Behaviour" ANGEW. CHEM. INT. ED., vol. 43, 2004, pages 5033-5036, XP002565337

## Description

La présente invention se rapporte à un nouveau solide hybride cristallisé à matrice organique-inorganique, de structure tridimensionnelle, et à son procédé de préparation à partir du solide hybride cristallisé à matrice organique-inorganique DMOF-1-NH₂ déjà décrit dans la littérature. Ledit nouveau solide, objet de la présente invention, porte une fonction azoture et est appelé dans la suite de la description DMOF-1-N₃. Ledit solide DMOF-1-N₃ présente une structure cristalline identique à celle du solide DMOF-1-NH₂ dont il est issu par une méthode de fonctionnalisation post-synthèse. Ledit solide DMOF-1-N₃ est avantageusement utilisé dans des applications en tant que catalyseur ou adsorbant ou encore en tant qu'intermédiaire pour l'obtention de solides hybrides cristallisés à matrice organique-inorganique fonctionnalisés.

La modification de matériaux par fonctionnalisation est une étape souvent nécessaire pour l'élaboration de solides possédant les propriétés adéquates pour une application donnée. En effet, il peut être souhaitable d'améliorer les propriétés physico-chimiques d'un matériau, en modifiant sa surface par exemple, afin que les nouvelles propriétés obtenues après modifications soient plus appropriées pour des applications en séparation ou en catalyse. L'un des moyens couramment employé pour modifier la surface d'un matériau consiste à faire réagir les groupements fonctionnels initialement présents à sa surface par des entités possédant les fonctions souhaitées pour l'application envisagée. Les fonctions présentes à la surface d'un matériau peuvent être des groupements hydroxyles (-OH) ou tout autre groupement (amino -NH₂ ou -NH- par exemple) que l'on souhaite modifier afin d'orienter la réactivité chimique de la surface du matériau. Les réactifs employés posséderont les fonctionnalités nécessaires pour réagir avec les groupes présents initialement à la surface du matériau, et le résultat de la réaction sera un nouveau groupement chimique possédant la réactivité désirée. Un exemple d'une telle transformation consiste à faire réagir les groupements hydroxyles de la surface d'une silice par un silane portant une fonction amine (D. Brunel, Microporous and Mesoporous Materials, 1999, 27, 329-344). Ainsi, la fonction hydroxyle est transformée en fonction amine plus apte à catalyser des réactions basiques ou à capter du CO₂ par exemple. Cette méthodologie est applicable à tout matériau possédant initialement des fonctions réactives. Ces matériaux peuvent être des oxydes, des zéolithes ou encore des matériaux hybrides organiques/inorganiques, encore appelés polymères de coordination.

Ces polymères de coordination, dont les premiers ont été décrits dans les années 1960, font l'objet d'un nombre croissant de publications. En effet, l'effervescence autour de ces matériaux a permis d'atteindre une diversité structurale avancée en peu de temps (Férey G., l'actualité chimique, janvier 2007, n°304). Conceptuellement, les solides hybrides poreux à matrice mixte organique-inorganique sont assez semblables aux solides poreux à squelette inorganique. Comme ces derniers, ils associent des entités chimiques en donnant naissance à une porosité. La principale différence réside dans la nature de ces entités. Cette différence est particulièrement avantageuse et est à l'origine de toute la versatilité de cette catégorie de solides hybrides. En effet, la taille des pores devient, par l'utilisation de ligands organiques, ajustable par le biais de la longueur de la chaîne carbonée desdits ligands organiques. La charpente, qui dans le cas des matériaux poreux inorganiques, ne peut accepter que quelques éléments (Si, Al, Ge, Ga, éventuellement Zn) peut, dans ce cas, accueillir tous les cations à l'exception des alcalins. Pour la préparation de ces matériaux hybrides, aucun agent structurant spécifique n'est requis, le solvant joue cet effet à lui seul.

Il apparaît donc clairement que cette famille de matériaux hybrides permet une multiplicité de structures et par conséquent comprend des solides finement adaptés aux applications qui leur sont destinées.

Les polymères de coordination comprennent au moins deux éléments appelés connecteurs et ligands dont l'orientation et le nombre des sites de liaisons sont déterminants dans la structure du matériau hybride. De la diversité de ces ligands et connecteurs naît, comme on l'a déjà précisé, une immense variété de matériaux hybrides.

Par ligand, on désigne la partie organique du matériau hybride. Ces ligands sont, le plus souvent, des di- ou tri-carboxylates ou des dérivés de la pyridine. Quelques ligands organiques fréquemment rencontrés sont représentés ci-après : bdc = benzène-1,4-dicarboxylate, btc = benzène-1,3,5-tricarboxylate, ndc = naphtalène-2,6-dicarboxylate, bpy = 4,4'-bipyridine, hfipbb = 4,4'-(hexafluororisopropylidene)-bisbenzoate, cyclam = 1,4,8,11-tetraazacyclotetradecane.

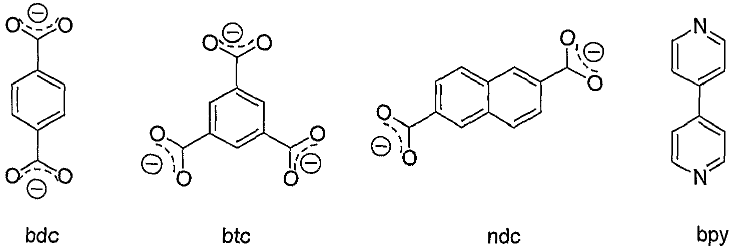

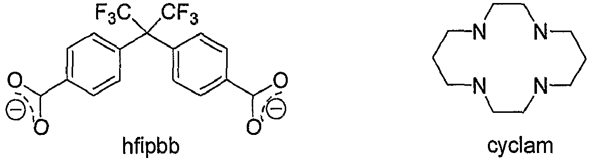

Par connecteur, on désigne l'entité inorganique du matériau hybride. Il peut s'agir d'un cation seul, d'un dimère, trimère ou tétramère ou encore d'une chaîne ou d'un plan.

Dans le cadre de la présente invention, les ligands utilisés sont l'acide 2-amino-téréphtalique (NH₂-bdc) et le 1,4-diazabicyclo[2.2.2]octane (DABCO). L'entité inorganique jouant le rôle de connecteur est, quant à elle, le zinc.

Les équipes de Yaghi et Férey ont ainsi décrit un nombre important de nouveaux matériaux hybrides (série des MOF - " Metal Organic Framework " - et série des MIL - " Matériaux de l'Institut Lavoisier " - respectivement). De nombreuses autres équipes ont suivi cette voie et aujourd'hui le nombre de nouveaux matériaux hybrides décrits est en pleine expansion. Le plus souvent, les études visent à mettre au point des structures ordonnées, présentant des volumes poreux extrêmement importants, une bonne stabilité thermique et des fonctionnalités chimiques ajustables.

Par exemple, Yaghi *et al.* décrivent une série de structures à base de bore dans la demande de brevet US 2006/0154807 et indiquent leur intérêt dans le domaine du stockage des gaz. Le brevet US 7.202.385 divulgue un récapitulatif particulièrement complet des structures décrites dans la littérature et illustre parfaitement la multitude de matériaux existant déjà à ce jour.

La préparation de matériaux hybrides organiques-inorganiques présentant une fonction organique réactive (MOF greffé) peut être mise en oeuvre par deux voies principales : la fonctionnalisation par autoassemblage et la fonctionnalisation par post-modification. La fonctionnalisation par autoassemblage est réalisée par la mise en présence d'un ligand organique ayant la fonction réactive (greffon) désirée et d'un composé inorganique ayant le rôle de connecteur. Cette méthode de fonctionnalisation est souvent difficile à mettre en oeuvre en raison des problèmes liés à la solubilisation et à la réactivité des ligands fonctionnalisés. En particulier, les ligands portant une fonction -OH, -COOH ou -NH₂ risquent d'interagir avec le composé inorganique (connecteur) conduisant alors à des solides non-isostructuraux au MOF de référence non greffé. La fonctionnalisation par post-modification est une méthode alternative intéressante qui ne présente pas les limites de la fonctionnalisation par autoassemblage. La fonctionnalisation par post-modification consiste à modifier directement la fonction organique d'au moins un type de ligand présent dans le MOF par une réaction chimique (greffage), plus précisément à substituer la fonction organique initiale par une fonction organique dont la réactivité est préférée pour une application ultérieure. Cette méthode suppose la présence sur le MOF initial d'une fonction organique accessible et réactive pour le greffage. Dans la littérature, les matériaux hybrides organiques-inorganiques portant un ligand avec une fonction amino -NH₂ tel que le DMOF-1-NH₂ (Z. Q. Wang ; K. K. Tanabe, S. M. Cohen, Inorganic Chemistry, 2009, 48, 296-306) sont décrits comme de bons supports pour le greffage de nombreuses fonctions, notamment les aldéhydes, les isocyanates et les anhydrides d'acide.

### Description de l'invention

La présente invention a pour objet un nouveau solide hybride cristallisé à matrice organique-inorganique présentant une structure tridimensionnelle. Ce nouveau solide est appelé DMOF-1-N₃. Il contient un réseau inorganique de centres métalliques à base de zinc connectés entre eux par des ligands organiques constitués par les entités -O₂C-C₆H₃-N₃-CO₂- et C₆H₁₂N₂.

Le solide hybride cristallisé DMOF-1-N₃ selon l'invention présente un diagramme de diffraction des rayons X incluant au moins les raies inscrites dans le tableau 1. Ce diagramme de diffraction est obtenu par analyse radiocristallographique au moyen d'un diffractomètre en utilisant la méthode classique des poudres avec le rayonnement Kα1 du cuivre (λ=1,5406Å). A partir de la position des pics de diffraction représentée par l'angle 2θ, on calcule, en appliquant la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue de Δ(2θ) égale à ±0,02° est communément admise. L'intensité relative I/I₀ affectée à chaque valeur de dₕₖₗ est mesurée d'après la hauteur du pic de diffraction correspondant. Le diagramme de diffraction des rayons X du solide hybride cristallisé DMOF-1-N₃ selon l'invention comporte au moins les raies aux valeurs de dₕₖₗ données dans le tableau 1. Dans la colonne des dₕₖₗ, on a indiqué les valeurs moyennes des distances inter-réticulaires en Angströms (A). Chacune de ces valeurs doit être affectée de l'erreur de mesure Δ(dₕₖₗ) comprise entre ±0.3 Å et ±0,01 Å.

**Tableau 1 : Valeurs moyennes des dₕₖₗ et intensités relatives mesurées sur un diagramme de diffraction de rayons X du solide hybride cristallisé DMOF-1-N₃.**

| 2 Thêta (°) | dₙₖₗ (Å) | I/I₀ | 2 Thêta (°) | dₕₖₗ (Å) | I/I₀ |
|---|---|---|---|---|---|
| 8.152 | 10.837643 | F | 27.609 | 3.228232 | ff |
| 9.19 | 9.615264 | mf | 27.813 | 3.205088 | ff |
| 11.538 | 7.663371 | mf | 29.029 | 3.0735 | f |
| 12.296 | 7.192531 | mf | 29.698 | 3.005821 | ff |
| 14.77 | 5.992845 | ff | 29.793 | 2.996423 | ff |
| 16.345 | 5.418821 | FF | 30.201 | 2.956894 | ff |
| 18.29 | 4.846741 | f | 30.938 | 2.888069 | ff |
| 18.44 | 4.807632 | ff | 31.15 | 2.868907 | ff |
| 18.782 | 4.720763 | f | 32.046 | 2.790679 | ff |
| 20.19 | 4.394638 | ff | 32.428 | 2.758663 | ff |
| 20.504 | 4.327992 | ff | 33.035 | 2.709411 | ff |
| 21.806 | 4.072553 | ff | 33.492 | 2.673413 | ff |
| 23.195 | 3.831685 | ff | 34.082 | 2.628514 | ff |
| 24.623 | 3.612547 | f | 34.36 | 2.607855 | ff |
| 24.737 | 3.596266 | ff | 35.102 | 2.554457 | ff |
| 24.996 | 3.559468 | ff | 35.184 | 2.548681 | ff |
| 25.978 | 3.427163 | ff | 35.373 | 2.535482 | ff |
| 26.086 | 3.413252 | ff | 36.361 | 2.468819 | ff |
| 26.333 | 3.381744 | ff | 36.52 | 2.458421 | ff |

où FF = très fort ; F = fort ; m = moyen ; mf = moyen faible ; f = faible ; ff = très faible. L'intensité relative I/I₀ est donnée en rapport à une échelle d'intensité relative où il est attribué une valeur de 100 à la raie la plus intense du diagramme de diffraction de rayons X : ff < 15; 15 ≤ f < 30 ; 30 ≤ mf < 50 ; 50 ≤ m < 65 ; 65 ≤ F < 85 ; FF ≥ 85.

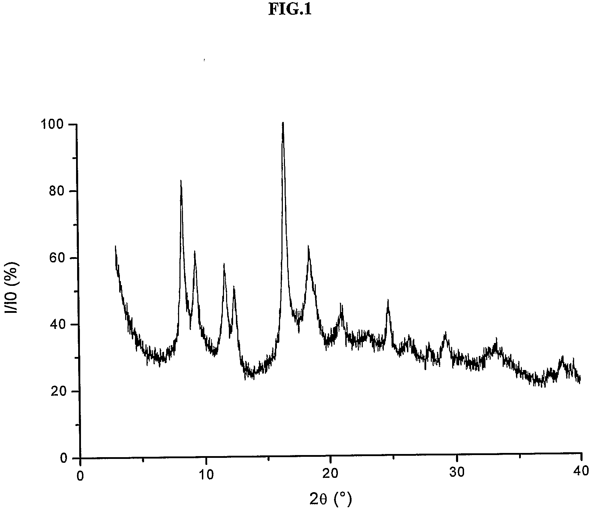

Le solide hybride cristallisé DMOF-1-N₃ selon l'invention présente une structure cristalline de base ou topologie qui est caractérisée par son diagramme de diffraction X donné par la figure 1. La structure cristalline du solide hybride cristallisé DMOF-1-N₃ selon l'invention est identique à celle présentée par le solide hybride cristallisé DMOF-1-NH₂ décrit dans la littérature (Z. Q. Wang ; K. K. Tanabe,S. M. Cohen, Inorganic Chemistry, 2009, 48, 296-306, et duquel ledit solide DMOF-1-N₃ est issu, conformément au procédé de préparation décrit plus bas dans la présente description.

Le solide hybride cristallisé DMOF-1-N₃ selon l'invention s'indexe en système quadratique de groupe d'espace P4/m avec comme paramètres de maille a = b = 10,837 Å ; c = 9,614 Å et alpha=beta=gamma=90°, ces définitions (système quadratique, groupe d'espace et paramètres de maille) étant bien connues de l'Homme du métier.

Le solide hybride cristallisé DMOF-1-N₃ selon l'invention présente une structure tridimensionnelle dans laquelle le réseau inorganique formé de centres métalliques à base de cations Zn²⁺ jouant le rôle de connecteurs sont liés entre eux par des ligands téréphtaliques déprotonés (-O₂C-C₆H₃-N₃-CO₂-) portant une fonction azoture N₃ sur le cycle aromatique et des ligands constitués de 1,4-diazabicyclo[2.2.2]octane (DABCO de formule brute C₆H₁₂N₂). Une caractéristique essentielle du solide hybride cristallisé DMOF-1-N₃ selon l'invention réside dans la présence de la fonction azoture sur le cycle aromatique de chacun des ligands téréphtaliques déprotonés, plus précisément appelés ligands 2-azido-téréphtalate (noté N₃-bdc). La structure obtenue, identique à celle du DMOF-1-NH₂, est tridimensionnelle. Les dimères de zinc sont connectés entre eux par des ligands téréphtaliques déprotonés formant des grilles carrées (par association de 4 dimères de Zn et 4 ligands N₃-bdc), lesquelles conduisent à une structure 3D par la superposition de ces grilles par les piliers de ligands DABCO. Chaque atome de Zn est donc pentacoordiné : chaque atome de zinc est entouré de quatre atomes d'oxygène issus de 4 ligands N₃-bdc se situant en position équatoriale et d'un atome d'azote issu d'un ligand DABCO se situant en position apicale. Un ligand N₃-bdc est relié à 4 atomes de zinc. Un ligand DABCO est relié à 2 atomes de zinc. Les ligands N₃-bdc occupent les positions équatoriales tandis que les ligands DABCO relient les atomes de zinc en position apicale.

Le solide hybride cristallisé DMOF-1-N₃ selon l'invention présente ainsi une composition chimique ayant pour motif de base Zn₂(-O₂C-C₆H₃-N₃-CO₂-)₂(C₆H₁₂N₂). Ce motif est répété n fois, la valeur de n dépendant de la cristallinité dudit solide.

Le solide hybride cristallisé DMOF-1-N₃ selon l'invention a également été caractérisé par Spectroscopie Infra Rouge à Transformée de Fourier (FT IR) et par ¹H RMN de manière à vérifier la présence de la fonction azoture sur chacun des ligands téréphtalates. Ainsi le spectre obtenu par FT IR présente une bande caractéristique de la fonction azoture à 2123 cm⁻¹. L'analyse ¹H RMN est réalisé sur un échantillon dudit solide hybride DMOF-1-N₃ selon l'invention, après digestion et dissolution totale dudit échantillon dans un mélange deutéré DCI/D₂O/DMSO-*d₆* selon un mode opératoire décrit dans la littérature (Z. Q. Wang, S. M. Cohen, Journal of the American Chemical Society, 2007, 129, 12368-12369). L'analyse ¹HRMN confirme la présence de la fonction azoture N₃ sur le cycle aromatique du ligand téréphtalique déprotoné : δ = 7,74-7,85 ppm, m, 3H, ArH. Les 3 protons conduisant à la détection du multiplet correspondent aux 3 protons portés par le cycle aromatique du ligand 2-azido-téréphtalate (N₃-bdc).

La présente invention a également pour objet un procédé de préparation du solide hybride cristallisé DMOF-1-N₃. Ledit solide DMOF-1-N₃ est préparé à partir du solide hybride cristallisé DMOF-1-NH₂ décrit dans la littérature (Z. Q. Wang ; K. K. Tanabe, S. M. Cohen, Inorganic Chemistry, 2009, 48, 296-306). Ledit solide DMOF-1-NH₂ présente une structure tridimensionnelle avec un réseau inorganique formé de centres métalliques à base de cations Zn²⁺ jouant le rôle de connecteurs liés entre eux par des ligands téréphtaliques déprotonés portant une fonction amine -NH₂ sur le cycle aromatique (notés ligands NH₂-bdc) et des ligands constitués de 1,4-diazabicyclo[2.2.2]octane (DABCO). Une méthode de préparation dudit solide DMOF-1-NH₂ est décrite dans la littérature (Z. Q. Wang ; K. K. Tanabe, S. M. Cohen, Inorganic Chemistry, 2009, 48, 296-306. Le procédé de préparation de l'invention permet la substitution de la fonction amine -NH₂ présente dans le solide DMOF-1-NH₂ par la fonction azoture N₃. Le procédé de préparation selon l'invention comprend au moins les étapes suivantes :
i/ introduction, dans un solvant polaire S, d'au moins dudit solide hybride cristallisé DMOF-1-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante :
   1 DMOF-1-NH₂: 3-12 R : 1-9 Q : 100-400 S
ii/ réaction dudit mélange réactionnel à une température comprise entre 0 et 100 °C pendant une durée comprise entre 1 et 24 heures pour obtenir ledit solide hybride cristallisé DMOF-1-N₃,
iiii/ filtration puis lavage dudit solide hybride cristallisé DMOF-1-N₃,
iv/ séchage dudit solide hybride cristallisé DMOF-1-N₃.

Conformément à ladite étape i) dudit procédé de préparation du solide hybride cristallisé DMOF-1-N₃ selon l'invention, ledit solide hybride cristallisé DMOF-1-NH₂ est préalablement séché avant d'être introduit dans ledit solvant polaire. Le séchage dudit solide hybride cristallisé DMOF-1-NH₂ est avantageusement réalisé à une température comprise entre 20 et 100 °C pendant une durée comprise entre 1 et 24 heures, très avantageusement pendant une durée d'environ 12 heures. Le séchage est effectué sous air ou sous vide, de manière préférée sous vide.

Conformément à ladite étape i) du procédé de préparation selon l'invention, ledit composé organique Q contenant une fonction azoture N₃ est avantageusement choisi parmi l'azoture de triméthylsilyl (TMS-N₃, (CH₃)₃SiN₃), l'azoture de triflyl (TfN₃, où Tf = CF₃SO₂), l'azoture de p-tosyl (TsN₃, ou 4-méthylbenzènesulfonylazide de formule C₆H₄(CH₃)SO₂N₃) et l'azoture de sodium (NaN₃). De manière préférée, ledit composé organique Q contenant une fonction N₃ est l'azoture de triméthylsilyl (TMS-N₃).

Conformément à ladite étape i) du procédé de préparation selon l'invention, ledit réactif intermédiaire R contenant une fonction nitrite NO₂ est avantageusement choisi parmi des réactifs alcalins comme le nitrite de sodium (NaNO₂) et le nitrite de calcium (Ca(NO₂)₂), des réactifs métalliques et des réactifs de type alcoyle tel que le tert-butyl-nitrite (tBuONO, (CH₃)₃CONO). De manière très préférée, ledit réactif intermédiaire R contenant une fonction nitrite NO₂ est le tert-butyl-nitrite (tBuONO). Ledit réactif intermédiaire R contenant une fonction nitrite NO₂ assure la formation d'un sel de diazonium qui réagit ensuite avec le composé organique Q.

Le solvant polaire S employé dans ladite étape i) du procédé de préparation selon l'invention, est préférentiellement volatil. Il est très avantageusement choisi parmi le tétrahydrofurane (THF) et l'acétonitrile.

Conformément à ladite étape i) du procédé de préparation selon l'invention, le mélange réactionnel présente préférentiellement la composition molaire suivante :
1 DMOF-1-NH₂ : 5-7 R : 5-8 Q : 100-200 S

Ladite étape de réaction conformément à ladite étape ii) du procédé de préparation selon l'invention est préférentiellement réalisée à une température comprise entre 0 et 60°C, et de façon encore préférée à température ambiante. Le mélange réactionnel est agité à l'aide d'un agitateur magnétique. La durée de réaction est comprise entre 1 et 24 heures, préférentiellement entre 5 et 15 heures, le plus souvent environ 12 heures. Le solide obtenu à l'issue de ladite étape ii) est un solide hybride cristallisé DMOF-1-N₃ présentant un diagramme de diffraction des rayons X incluant au moins les raies inscrites dans le tableau 1.

Conformément à ladite étape iii) du procédé de préparation selon l'invention, ledit solide hybride cristallisé DMOF-1-N₃ obtenu à l'issue de ladite étape ii) est filtré puis lavé avec des solvants adaptés. Le lavage dudit solide DMOF-1-N₃ est préférentiellement mis en oeuvre par une première séquence de lavages au moyen de solvants polaires, par exemple le THF, suivis d'une deuxième séquence de lavages au moyen de solvants volatils, par exemple le dichlorométhane. On procède, par exemple, à l'étape de lavage dudit solide hybride cristallisé DMOF-1-N₃ en réalisant 3 séquences de lavage au THF suivies de 3 séquences de lavage au dichlorométhane CH₂Cl₂.

Conformément à ladite étape iv) du procédé de préparation selon l'invention, ledit solide hybride cristallisé DMOF-1-N₃ est séché. Le séchage est réalisé sous air ou sous vide entre 20°C et 100°C. De manière préférée, le séchage est réalisé à température ambiante sous vide pendant une durée variant entre 1 et 24 heures, le plus souvent environ 12 heures.

Conformément au procédé de préparation selon l'invention, les ligands DABCO sont des ligands non réactifs : ils n'entrent pas en compétition avec les ligands NH₂-bdc et ne réagissent pas avec ledit composé organique Q contenant ladite fonction N₃.

Le solide obtenu à l'issue de l'étape iv) est identifié comme étant le solide hybride cristallisé DMOF-1-N₃ selon l'invention. Les analyses réalisées sur le solide obtenu à l'issue du procédé de préparation selon l'invention démontrent l'efficacité du traitement par post-modification. En particulier, l'analyse réalisée sur le solide hybride cristallisé DMOF-1-N₃ par DRX démontre que le traitement de fonctionnalisation par post-modification permettant de substituer la fonction amino - NH₂ par la fonction azoture -N₃ n'affecte pas la structure et la cristallinité du solide. L'analyse par FT-IR révèle la présence de la fonction azoture -N₃ sur chacun des ligands téréphtalates dans le solide DMOF-1-N₃. L'analyse ¹H RMN confirme la présence de la fonction azoture -N₃ sur chacun des ligands téréphtalates dans le solide DMOF-1-N₃ et permet d'estimer le taux de modification des fonctions amino en fonctions azotures N₃. Conformément au procédé de préparation selon l'invention, ce taux de modification est très élevé, c'est-à-dire au moins égal à 95 %, de préférence au moins égal à 98%. Le taux de modification est calculé en quantifiant la décroissance de l'aire relative des signaux des protons aromatiques de la forme DMOF-1-NH₂ par rapport à ceux de la forme DMOF-1-N₃. Le spectre ¹H RMN du solide DMOF-1-N₃ selon l'invention présente de nouveaux signaux liés à l'apparition d'un multiplet intégrant pour 3 protons, lesquels correspondent aux 3 protons portés par le cycle aromatique du ligand 2-azido-téréphtalate (N₃-bdc).

### Exemples

Les solides hybrides cristallisés DMOF-1-NH₂ et DMOF-1-N₃ obtenus à l'issue de la mise en oeuvre des protocoles de préparation illustrés par les exemples 1 et 2 suivants ont été analysés par diffraction des rayons X, par spectroscopie infrarouge à transformée de Fourrier (IRTF) et par résonance magnétique nucléaire de l'hydrogène (¹H RMN).

Les diagrammes de diffraction des rayons X sont obtenus par analyse radiocristallographique en utilisant la méthode classique des poudres au moyen d'un diffractomètre Bruker D5005 (CuKα₁₊₂= 0.15418 nm) équipé d'un monochromateur arrière courbe graphite et d'un détecteur à scintillation. Les analyses des solides ont été enregistrées en mode Debye-Scherrer de 3 à 80° (2θ) avec un pas de 0,02° pendant 8 secondes.

Les analyses infra rouge sont réalisées à l'aide de pastilles KBr sur un appareil FTIR Vector 22 Bruker avec une gamme de fonctionnement utile de : 4000-400 cm⁻¹.

Les spectres de Résonance Magnétique Nucléaire en solution sont obtenus à l'aide d'un Spectromètre de RMN Bruker Avance 250 (5,87T, 250MHz pour 1 H).

### Exemple 1 : Préparation du solide hybride cristallisé DMOF-1-NH₂

0,781 g de nitrate de zinc Zn(NO₃)₂.4H₂O (3,00 mmol, Merck, 98,5%) et 0,554 g d'acide 2-amino-1,4-benzène dicarboxylique NH₂-BDC (3,03mmol, Alfa Aesar, 99%) sont dissous dans 75mL de diméthylformamide (DMF, Aldrich, 99,8%). 0,542 g de 1,4-diazabicyclo[2.2.2] octane DABCO (4,815 mmol, Aldrich, 98%), est ensuite ajouté à la solution. Cet ajout se traduit par l'apparition immédiate d'un précipité blanc. Le précipité obtenu est filtré sur fritté de faible porosité tandis que le filtrat est récupéré et dilué avec 75 mL de DMF. La solution constituée du filtrat est ensuite divisée en 5 aliquotes de 30 mL qui sont réparties dans 5 autoclaves inox (capacité 43 mL) et chauffées de 35 à 120°C avec une rampe de 2,5°C/min. La température est maintenue à 120°C pendant 12 heures. Ce mode opératoire permet l'obtention de cristaux jaunâtres en forme de bâtonnets de DMOF-1-NH₂. La liqueur mère est laissée à décanter et les cristaux sont lavés trois fois avec 6 mL de DMF puis trois fois avec 6 mL de CH₂Cl₂ (Acros Organics, 99,99%). Les cristaux sont ensuite laissés en suspension dans 10 mL de CH₂Cl₂ pendant 3 jours, avec un renouvellement du solvant toutes les 24 heures. Finalement, les cristaux sont séchés sous vide à température ambiante pendant une nuit. 300 mg de DMOF-1-NH₂ sont ainsi obtenus, soit un rendement de 35% basé sur le Zn(NO₃)₂.4H₂O de départ.

Ledit solide hybride cristallisé DMOF-1-NH₂ est analysé par diffraction des rayons X, par spectroscopie infrarouge à transformée de Fourrier et par résonance magnétique nucléaire de l'hydrogène (¹H RMN).

L'analyse par diffraction des rayons X révèle que ledit solide obtenu à l'exemple 1 est identifié comme étant constitué de solide DMOF-1-NH₂ : le diffractogramme effectué sur ledit solide est identique à celui présenté dans Inorganic Chemistry, 2009, 48, 300.

L'analyse par FT-IR révèle la présence de la fonction amino -NH₂ dans le solide DMOF-1-NH₂. IR (Pastille de KBr), υ (cm⁻¹): 3454, 3344, 2958 , 1632 , 1666, 1577 , 1435 , 1376 , 1256 , 1056 , 833 , 810 , 772 , 704 , 661 , 593. Les bandes à 3454 et 3344 cm⁻¹ sont attribuées à la fonction amine.

L'analyse ¹H RMN est réalisé sur un échantillon du solide DMOF-1-NH₂, après digestion et dissolution totale de l'échantillon dans un mélange deutéré DCI/D₂O/DMSO-*d₆* selon le mode opératoire décrit dans la littérature (Z. Q. Wang, S. M. Cohen, Journal of the American Society, 2007, 129, 12368-12369) : 10 mg de solide hybride DMOF-1-NH₂ sont digérés et dissous dans 1,5 mL de DMSO deutéré et 0,2 mL d'une solution diluée de DCI (préparée à partir d'une solution contenant 0,23mL de DCI/D₂O à 35% et 1mL de DMSO deutéré). L'analyse ¹H NMR révèle également la présence du groupement amino - NH₂ dans le solide DMOF-1-NH₂, ¹H RMN, 250 Hz, t.a, δ (ppm / (DCI/D₂O/DMSO-*d₆*)) : 7,02 (d, 1H, J = 8,3Hz); 7,38 (s, 1H); 7,74 (d, 1H, J = 8,3Hz), 3,52 (s, 6H, DABCO).

L'analyse ¹H RMN permet également de confirmer la présence des ligands NH₂-bdc et DABCO dans une proportion telle que le rapport molaire NH₂-bdc /DABCO = 2.

### Exemple 2 : Préparation du solide DMOF-1-N₃ par post-modification du solide hybride DMOF-1-NH₂.

80 mg (0,27 mmol équivalent -NH₂) de solide DMOF-1-NH₂ séché, obtenu à l'issue du procédé illustré dans l'exemple 1, sont placés dans une fiole (capacité 10 mL) avec 3 mL (37 mmol) de THF, 0,217 mL (1,84 mmol) de tBuONO (Aldrich) et 0,199 mL (1,508 mmol) de TMS-N₃ (Aldrich). Après 12 heures de réaction à température ambiante, le solide est filtré puis lavé trois fois avec 6 mL de THF (Carlo Erba) puis trois fois avec 6 mL de CH₂Cl₂ avant d'être séché sous vide à température ambiante.

Le solide obtenu a été analysé par diffraction des rayons X et identifié comme étant constitué de solide hybride cristallisé DMOF-1-N₃ : le diffractogramme effectué sur le solide DMOF-1-N₃ est celui donné par la figure 1. L'analyse réalisée sur le solide hybride cristallisé DMOF-1-N₃ par DRX démontre que le traitement de post-modification permettant de substituer la fonction amino - NH₂ par la fonction azoture -N₃ n'affecte pas la structure et la cristallinité du solide.

L'analyse par FT-IR révèle la présence du groupement azoture -N₃ sur chacun des ligands téréphtalates dans le solide DMOF-1-N₃, Le spectre obtenu par FT IR présente une bande caractéristique de la fonction azoture à 2123 cm⁻¹. Les bandes à 3454 et 3344 cm⁻¹ correpondant à la fonction -NH₂ ont disparu.

L'analyse ¹H RMN est réalisée sur un échantillon du solide hybride DMOF-1-N₃, après digestion et dissolution totale de l'échantillon dans un mélange deutéré DCI/D₂O/DMSO-*d₆* selon un mode opératoire décrit dans la littérature (Z. Q. Wang, S. M. Cohen, Journal of the American Chemical Society, 2007, 129, 12368-12369) : 10 mg de solide hybride DMOF-1-N₃ sont digérés et dissous dans 1,5 mL de DMSO deutéré et 0,2 mL d'une solution diluée de DCI (préparée à partir d'une solution contenant 0,23mL de DCI/D₂O à 35% et 1 mL de DMSO deutéré).

L'analyse ¹H RMN confirme la présence de la fonction azoture N₃ sur le cycle aromatique du ligand téréphtalique déprotoné. ¹H RMN, 250 Hz, t.a, δ (ppm / (DCI/D₂O/DMSO-*d₆*)) : δ = 7,74-7,85 ppm, m, 3H, ArH. Les 3 protons conduisant à la détection du multiplet correspondent aux 3 protons portés par le cycle aromatique du ligand 2-azido-téréphtalate (N₃-bdc).

La comparaison des spectres IR et ¹H RMN obtenus pour le solide DMOF-1-NH₂ et pour le solide DMOF-1-N₃ démontre l'efficacité dudit traitement de post-modification, la comparaison des spectres ¹H RMN obtenus pour le solide DMOF-1-NH₂ et pour le solide DMOF-1-N₃ permettant d'estimer à 98% le taux de modification des fonctions amino en fonctions azotures N₃, en quantifiant la décroissance de l'aire relative des signaux du composé DMOF-1-NH₂ par rapport à ceux du composé DMOF-1-N₃.

## Revendications

1. Solide hybride cristallisé à matrice organique-inorganique DMOF-1-N₃, de structure tridimensionnelle, contenant un réseau inorganique de centres métalliques à base de zinc connectés entre eux par des ligands organiques constitués par les entités -O₂C-C₆H₃-N₃-CO₂- (ligand N3-bdc) et C₆H₁₂N₂ (ligand DABCO), ledit solide présentant un diagramme de diffraction des rayons X incluant au moins les raies inscrites dans le tableau ci-dessous :
| 2 Thêta (°) | dₕₖₗ (Å) | I/I₀ | 2 Thêta (°) | dₕₖₗ (Å) | I/I₀ |
|---|---|---|---|---|---|
| 8.152 | 10.837643 | F | 27.609 | 3.228232 | ff |
| 9.19 | 9.615264 | mf | 27.813 | 3.205088 | ff |
| 11.538 | 7.663371 | mf | 29.029 | 3.0735 | f |
| 12.296 | 7.192531 | mf | 29.698 | 3.005821 | ff |
| 14.77 | 5.992845 | ff | 29.793 | 2.996423 | ff |
| 16.345 | 5.418821 | FF | 30.201 | 2.956894 | ff |
| 18.29 | 4.846741 | f | 30.938 | 2.888069 | ff |
| 18.44 | 4.807632 | ff | 31.15 | 2.868907 | ff |
| 18.782 | 4.720763 | f | 32.046 | 2.790679 | ff |
| 20.19 | 4.394638 | ff | 32.428 | 2.758663 | ff |
| 20.504 | 4.327992 | ff | 33.035 | 2.709411 | ff |
| 21.806 | 4.072553 | ff | 33.492 | 2.673413 | ff |
| 23.195 | 3.831685 | ff | 34.082 | 2.628514 | ff |
| 24.623 | 3.612547 | f | 34.36 | 2.607855 | ff |
| 24.737 | 3.596266 | ff | 35.102 | 2.554457 | ff |
| 24.996 | 3.559468 | ff | 35.184 | 2.548681 | ff |
| 25.978 | 3.427163 | ff | 35.373 | 2.535482 | ff |
| 26.086 | 3.413252 | ff | 36.361 | 2.468819 | ff |
| 26.333 | 3.381744 | ff | 36.52 | 2.458421 | ff |
où FF = très fort ; F = fort ; m = moyen ; mf = moyen faible ; f = faible ; ff = très faible, l'intensité relative I/I₀ étant donnée en rapport à une échelle d'intensité relative où il est attribué une valeur de 100 à la raie la plus intense du diagramme de diffraction de rayons X : ff < 15 ; 15 ≤ f < 30; 30 ≤ mf < 50; 50 ≤ m < 65 ; 65 ≤ F < 85 ; FF ≥ 85.

2. Solide hybride cristallisé DMOF-1-N₃ selon la revendication 1 tel qu'il présente une structure cristalline identique à celle du solide hybride cristallisé DMOF-1-NH₂.

3. Solide hybride cristallisé DMOF-1-N₃ selon la revendication 1 ou la revendication 2 tel qu'il s'indexe en système quadratique de groupe d'espace P4/m avec comme paramètres de maille a = b = 10,837 Å; c = 9,614 Å et alpha=beta=gamma=90°.

4. Solide hybride cristallisé DMOF-1-N₃ selon l'une des revendications 1 à 3 tel que chaque atome de zinc est entouré de quatre atomes d'oxygène issus de 4 ligands N₃-bdc se situant en position équatoriale et d'un atome d'azote issu d'un ligand DABCO se situant en position apicale.

5. Solide hybride cristallisé DMOF-1-N₃ selon l'une des revendications 1 à 4 tel qu'il présente une composition chimique ayant pour motif de base Zn₂(-O₂C-C₆H₃-N₃-CO₂-)₂(C₆H₁₂N₂).

6. Procédé de préparation d'un solide hybride cristallisé DMOF-1-N₃ à partir d'un solide hybride cristallisé DMOF-1-NH₂ comprenant au moins les étapes suivantes :
i/ introduction, dans un solvant polaire S, d'au moins dudit solide hybride cristallisé DMOF-1-NH₂, d'au moins un composé organique Q contenant une fonction azoture N₃ et d'au moins un réactif intermédiaire R contenant une fonction nitrite NO₂ dans une proportion telle que le mélange réactionnel présente la composition molaire suivante :
1 DMOF-1-NH₂ : 3-12 R : 1-9 Q : 100-400 S
ii/ réaction dudit mélange réactionnel à une température comprise entre 0 et 100 °C pendant une durée comprise entre 1 et 24 heures pour obtenir ledit solide hybride cristallisé DMOF-1-N₃,
iiii/fiitration puis lavage dudit solide hybride cristallisé DMOF-1-N₃,
iv/ séchage dudit solide hybride cristallisé DMOF-1-N₃.

7. Procédé de préparation selon la revendication 6 tel que ledit solide hybride cristallisé DMOF-1-NH₂ est préalablement séché avant d'être introduit dans ledit solvant polaire.

8. Procédé de préparation selon la revendication 6 ou la revendication 7 tel que ledit composé organique Q contenant une fonction azoture N₃ est choisi parmi l'azoture de triméthylsilyl (TMS-N₃), l'azoture de triflyl (TfN₃), l'azoture de p-tosyl (TsN₃) et l'azoture de sodium (NaN₃).

9. Procédé de préparation selon l'une des revendications 6 à 8 tel que ledit réactif intermédiaire R contenant une fonction nitrite NO₂ est le tert-butyl-nitrite (tBuONO).

10. Procédé de préparation selon l'une des revendications 6 à 9 tel que ledit solvant polaire S est choisi parmi le tétrahydrofurane (THF) et l'acétonitrile.

11. Procédé de préparation selon l'une des revendications 6 à 10 tel que ledit mélange réactionnel présente la composition molaire suivante :
1 DMOF-1-NH₂ : 5-7 R : 5-8 Q : 100-200 S

12. Procédé de préparation selon l'une des revendications 6 à 11 tel que ladite étape ii) est réalisée à température ambiante.

13. Procédé de préparation selon l'une des revendications 6 à 12 tel que la durée de ladite étape ii) est comprise entre 5 et 15 heures.

## Patentansprüche

1. Kristallisierter hybrider DMOF-1-N₃-Feststoff mit organischanorganischer Matrix mit dreidimensionaler Struktur, der ein anorganisches Netzwerk mit Metallzentren auf der Basis von Zink enthält, die miteinander durch organische Liganden verbunden sind, die aus den Spezies -O₂C-C₆H₃-N₃-CO₂- (Ligand N₃-bdc) und C₆H₁₂N₂ (Ligand DABCO) bestehen, wobei der Feststoff ein Röntgenbeugungsdiagramm aufweist, das mindestens die Peaks enthält, die in der nachfolgenden Tabelle eingetragen sind:
| 2 Theta (°) | dₕₖₗ (Å) | I/I₀ | 2 Theta (°) | dₕₖₗ(Å) | I/I₀ |
|---|---|---|---|---|---|
| 8.152 | 10.837643 | F | 27.609 | 3.228232 | ff |
| 9.19 | 9.616264 | mf | 27.813 | 3,205088 | ff |
| 11.538 | 7.663371 | mf | 29.029 | 3.0735 | f |
| 12.296 | 7.192531 | mf | 29.698 | 3.005821 | ff |
| 14.77 | 5.992845 | ff | 29.793 | 2.996423 | ff |
| 16.345 | 5.418821 | FF | 30.201 | 2.956894 | ff |
| 18.29 | 4.846741 | f | 30.938 | 2.888069 | ff |
| 18.44 | 4.807632 | ff | 31.15 | 2.868907 | ff |
| 18.782 | 4.720763 | f | 32.046 | 2.790679 | ff |
| 20.19 | 4.394638 | ff | 32.428 | 2.758663 | ff |
| 20.504 | 4.327992 | ff | 33.035 | 2.709411 | ff |
| 21.806 | 4.072553 | ff | 33.492 | 2.673413 | ff |
| 23.195 | 3.831685 | ff | 34.082 | 2.628514 | ff |
| 24.623 | 3.612547 | f | 34.36 | 2.607855 | ff |
| 24.737 | 3.596266 | ff | 35.102 | 2.554457 | ff |
| 24.996 | 3.059468 | ff | 35.184 | 2.548681 | ff |
| 25.978 | 3.427163 | ff | 35.373 | 2.535482 | ff |
| 26.086 | 3.413252 | ff | 36.361 | 2.468819 | ff |
| 26.333 | 3.381744 | ff | 36.52 | 2.458421 | ff |
wobei FF = sehr stark; F = stark; m = mittel; mf = mittelschwach; f = schwach; ff = sehr schwach ist, wobei die relative Intensität I/I₀ bezogen auf eine relative Intensitätsskala angegeben wird, wobei dem intensivsten Peak des Röntgendiffraktionsdiagramms ein Wert von 100 zugeschrieben wird: ff < 15; 15 ≤ f < 30; 30 ≤ mf < 50; 50 ≤ m < 65; 65 ≤ F < 85; FF ≥ 85.

2. Kristallisierter hybrider DMOF-1-N₃-Feststoff nach Anspruch 1, wobei er eine Kristallstruktur aufweist, die mit der des kristallisierten hybriden DMOF-1-NH₂-Feststoffs identisch ist.

3. Kristallisierter, hybrider DMOF-1-N₃-Feststoff nach Anspruch 1 oder Anspruch 2, wobei er in einem quadratischen System der Raumgruppe P4/m indiziert ist, wobei er als Gitterparameter a = b = 10,837 Ǻ; c = 9,614 Ǻ und alpha=beta=gamma=90° aufweist.

4. Kristallisierter hybrider DMOF-1-N₃-Feststoff nach einem der Ansprüche 1 bis 3, wobei jedes Zinkatom von vier Sauerstoffatomen, die aus 4 Liganden N₃-bdc stammen, die an äquatorialer Position liegen, und von einem Stickstoffatom, das aus einem Liganden DABCO stammt, der an apikaler Position liegt, umgeben ist.

5. Kristallisierter hybrider DMOF-1-N₃-Feststoff nach einem der Ansprüche 1 bis 4, wobei er eine chemische Zusammensetzung aufweist, die als Grundeinheit Zn₂(-O₂C-C₆H₃-N₃-CO₂-)₂(C₆H₁₂N₂) aufweist.

6. Verfahren zur Herstellung eines kristallisierten hybriden DMOF-1-N₃-Feststoffs aus einem kristallisierten hybriden DMOF-1-NH₂-Feststoff, das mindestens die folgenden Schritte umfasst:
i/ Einführen, in ein polares Lösemittel S, mindestens des kristallisierten hybriden DMOF-1-NH₂-Feststoffs, mindestens einer organischen Verbindung Q, enthaltend eine Azidfunktion N₃, und mindestens eines Zwischenreagens R, enthaltend eine Nitritfunktion NO₂, in einem solchen Anteil, dass das Reaktionsgemisch die folgende Molzusammensetzung aufweist:
1 DMOF-1-NH₂ : 3-12 R : 1-9 Q : 100-400 S
ii/ Umsetzen des Reaktionsgemischs bei einer Temperatur im Bereich zwischen 0 und 100 °C für eine Dauer im Bereich zwischen 1 und 24 Stunden, um den kristallisierten hybriden DMOF-1-N₃-Feststoff zu erhalten,
iii/ Filtern, dann Waschen des kristallisierten hybriden DMOF-1-N₃-Feststoffs,
iv/ Trocknen des kristallisierten hybriden DMOF-1-N₃-Feststoffs.

7. Verfahren zur Herstellung nach Anspruch 6, wobei der kristallisierte hybride DMOF-1-NH₂-Feststoff vorher getrocknet wird, bevor er in das polare Lösemittel eingeführt wird.

8. Verfahren zur Herstellung nach Anspruch 6 oder 7, wobei die organische Verbindung Q, die eine Azidfunktion N₃ enthält, aus Trimethylsilylazid (TMS-N₃), Triflylazid (TfN₃), p-Tosylazid (TsN₃) und Natriumazid (NaN₃) ausgewählt ist.

9. Verfahren zur Herstellung nach einem der Ansprüche 6 bis 8, wobei das Zwischenreagens R, das eine Nitritfunktion NO₂ enthält, tert-Butylnitrit (tBuONO) ist.

10. Verfahren zur Herstellung nach einem der Ansprüche 6 bis 9, wobei das polare Lösemittel S aus Tetrahydrofuran (THF) und Acetonitril ausgewählt ist.

11. Verfahren zur Herstellung nach einem der Ansprüche 6 bis 10, wobei das Reaktionsgemisch die folgende Molzusammensetzung aufweist:
1 DMOF-1-NH₂ : 5-7 R : 5-8 Q : 100-200 S

12. Verfahren zur Herstellung nach einem der Ansprüche 6 bis 11, wobei der Schritt ii) bei Umgebungstemperatur ausgeführt wird.

13. Verfahren zur Herstellung nach einem der Ansprüche 6 bis 12, wobei die Dauer von Schritt ii) im Bereich zwischen 5 und 15 Stunden liegt.

## Claims

1. Crystallized hybrid solid with a DMOF-1-N₃ organic-inorganic matrix, of three-dimensional structure, containing an inorganic network of zinc-based metal centers connected to one another by organic ligands constituted by the entities -O₂C-C₆H₃-N₃-CO₂- (N3-bdc ligand) and C₆H₁₂N₂ (DABCO ligand), with said solid having an X-ray diffraction diagram including at least the lines inscribed in the table below:
| 2 Thêta (°) | dₕₖₗ (Å) | I/I₀ | 2 Thêta (°) | dₕₖₗ (Å) | I/I₀ |
|---|---|---|---|---|---|
| 8.152 | 10.837643 | F | 27.609 | 3.228232 | ff |
| 9.19 | 9.615264 | mf | 27.813 | 3.205088 | ff |
| 11.538 | 7.663371 | mf | 29.029 | 3.0735 | f |
| 12.296 | 7.192531 | mf | 29.698 | 3.005821 | ff |
| 14.77 | 5.992845 | ff | 29.793 | 2.996423 | ff |
| 16.345 | 5.418821 | FF | 30.201 | 2.956894 | ff |
| 18.29 | 4.846741 | f | 30.938 | 2.888069 | ff |
| 18.44 | 4.807632 | ff | 31.15 | 2.868907 | ff |
| 18.782 | 4.720763 | f | 32.046 | 2.790679 | ff |
| 20.19 | 4.394638 | ff | 32.428 | 2.758663 | ff |
| 20.504 | 4.327992 | ff | 33.035 | 2.709411 | ff |
| 21.806 | 4.072553 | ff | 33.492 | 2.673413 | ff |
| 23.195 | 3.831685 | ff | 34.082 | 2.628514 | ff |
| 24.623 | 3.612547 | f | 34.36 | 2.607855 | ff |
| 24.737 | 3.596266 | ff | 35.102 | 2.554457 | ff |
| 24.996 | 3.559468 | ff | 35.184 | 2.548681 | ff |
| 25.978 | 3.427163 | ff | 35.373 | 2.535482 | ff |
| 26.086 | 3.413252 | ff | 36.361 | 2.468819 | ff |
| 26.333 | 3.381744 | ff | 36.52 | 2.458421 | ff |
where FF = Very High; F = High; m = Medium; mf = Medium Low; f = Low; ff = Very Low, with the relative intensity I/Iₒ being provided relative to a relative intensity scale where a value of 100 is assigned to the most intense line of the X-ray diffraction diagram: ff< 15; 15 ≤ f < 30; 30 ≤ mf < 50; 50 ≤ m < 65; 65 ≤ F < 85; and FF ≥ 85.

2. DMOF-1-N₃ crystallized hybrid solid according to Claim 1, such that it has a crystalline structure that is identical to the one of the DMOF-1-NH₂ crystallized hybrid solid.

3. DMOF-1-N₃ crystallized hybrid solid according to Claim 1 or Claim 2 such that it is indexed in a quadratic system of the P4/m space group with, as mesh parameters, a = b = 10.837 Å; c = 9.614 Å, and alpha=beta=gamma=90°.

4. DMOF-1-N₃ crystallized hybrid solid, according to one of Claims 1 to 3, such that each zinc atom is surrounded by four oxygen atoms obtained from 4 N₃-bdc ligands that are located in equatorial position and a nitrogen atom that is obtained from a DABCO ligand that is located in apical position.

5. DMOF-1-N₃ crystallized hybrid solid according to one of Claims 1 to 4, such that it has a chemical composition that has Zn₂(-O₂C-C₆H₃-N₃-CO₂-)₂(C₆H₁₂N₂) for its base pattern.

6. Process for the preparation of a DMOF-1-N₃ crystallized hybrid solid starting from a DMOF-1-NH₂ crystallized hybrid solid that comprises at least the following stages:
i/ Introduction, into a polar solvent S, of at least said DMOF-1-NH₂ crystallized hybrid solid, at least one organic compound Q that contains an N₃ azide group, and at least one intermediate reagent R that contains an NO₂ nitrite group in a proportion such that the reaction mixture has the following molar composition:
1 DMOF-1-NH₂ : 3-12 R : 1-9 Q : 100-400 S
ii/ Reaction of said reaction mixture at a temperature of between 0 and 100°C for a period of between 1 and 24 hours to obtain said DMOF-1-N₃ crystallized hybrid solid,
iii/ Filtration, and then washing of said DMOF-1-N₃ crystallized hybrid solid,
iv/ Drying of said DMOF-1-N₃ crystallized hybrid solid.

7. Process for preparation according to Claim 6, such that said DMOF-1-NH₂ crystallized hybrid solid is dried in advance before being introduced into said polar solvent.

8. Process for preparation according to Claim 6 or Claim 7, such that said organic compound Q that contains an N₃ azide group is selected from among trimethylsilyl azide (TMS-N₃), triflyl azide (TfN₃), p-tosyl azide (TsN₃), and sodium azide (NaN₃).

9. Process for preparation according to one of Claims 6 to 8, such that said intermediate reagent R that contains an NO₂ nitrite group is tert-butyl-nitrite (tBuONO).

10. Process for preparation according to one of Claims 6 to 9, such that said polar solvent S is selected from among tetrahydrofuran (THF) and acetonitrile.

11. Process for preparation according to one of Claims 6 to 10 such that said reaction mixture has the following molar composition:
1 DMOF-1-NH₂: 5-7 R : 5-8 Q : 100-200 S

12. Process for preparation according to one of Claims 6 to 11, such that said stage ii) is implemented at ambient temperature.

13. Process for preparation according to one of Claims 6 to 12, such that the duration of said stage ii) is between 5 and 15 hours.
